# EUROPEAN PATENT SPECIFICATION

(11) **EP 1 639 783 B1**
(45) Date of publication and mention of the grant of the patent: **31.10.2018**
(21) Application number: 04756364.8
(22) Date of filing: 30.06.2004
(51) Int. Cl.: H04L 29/06, H04L 12/66, H04L 12/857

(54) **METHOD AND APPARATUS FOR MAPPING PRIORITIZED QOS PACKETS TO PARAMETERIZED QOS CHANNELS AND VICE VERSA**
VERFAHREN UND GERÄT ZUR ABBILDUNG VON PRIORISIERTEN QOS-DATENPAKETEN AUF PARAMETRIERTEN QOS-KANÄLEN UND VICE VERSA
PROCÉDÉ ET DISPOSITIF DESTINÉS AU MAPPAGE DE PAQUETS QOS CLASSÉS PAR ORDRE DE PRIORITÉ VERS DES CANAUX QOS PARAMÉTRÉS ET INVERSÉMENT

(30) Priority: 30.06.2003 US 483785 P; 18.08.2003 US 496248 P
(43) Date of publication of application: 29.03.2006
(73) Proprietor: Thomson Licensing, 92130 Issy-les-Moulineaux (FR)
(72) Inventor: STAHL, Thomas Anthony, Indianapolis, IN 46256 (US); RHODES, Robert Andrew, Carmel, IN 46033 (US)
(74) Representative: Vidon Brevets & Stratégie
(86) International application number: PCT/US2004/020894
(87) International publication number: WO 2005/006708

(56) References cited:
- WO-A-01/74096
- CARL EKLUND, ROGER B. MARKS, KENNETH L. STANWOOD: "IEEE Standard 802.16; A Technical Overview of the WirelessMAN Air Interface for Broadband Wireless Access" IEEE COMMUNICATIONS MAGAZINE, [Online] June 2002 (2002-06), pages 98-107, XP002304234 Retrieved from the Internet: URL:http://wirelessman.org/docs/02/C80216- 02_05.pdf> [retrieved on 2004-11-05]
- JOHANSSON P: "IPv4 over IEEE 1394 - RFC 2734" NETWORK WORKING GROUP REQUEST FOR COMMENTS, XX, XX, December 1999 (1999-12), pages 1-29, XP002238651
- BERNHARD H WALKE ET AL: "IP over Wireless Mobile ATM-Guaranteed Wireless QoS by HiperLAN/2", PROCEEDINGS OF THE IEEE, IEEE. NEW YORK, US, vol. 89, no. 1, 1 January 2001 (2001-01-01), XP011044472, ISSN: 0018-9219
- "Broadband Radio Access Networks (BRAN); HIPERLAN Type 2; Packet based Convergence Layer; Part 2: Ethernet Service Specific Convergence Sublayer (SSCS); ETSI TS 101 493-2", IEEE, LIS, SOPHIA ANTIPOLIS CEDEX, FRANCE, vol. BR, no. V1.2.1, 1 December 2001 (2001-12-01), XP014006401, ISSN: 0000-0001

## Description

### TECHNICAL FIELD

The present invention relates to communications systems generally and, more particularly, to an apparatus and method for providing quality of service (QoS) between a prioritized network and a parameterize network, for example a network with isochronous channels.

### BACKGROUND

Ethernet has become a popular technology for broadband home networks. Ethernet is well-suited to providing a shared Internet connection between multiple PCs in a household and has been the technology of choice mostly because most PCs, Cable Modems, DSL modems, etc. sold today already support networking over Ethernet.

While home networks are useful for shared internet and other traditional computing connections, there are also many potential entertainment applications for streaming digital video and audio across a home network.
Applications include video distribution from a satellite set top box, music distribution from a PC , and sharing video among networked PVRs (e.g., ReplayTV), etc.

Streaming AV content requires good quality of service (QoS). If a data packet is lost or received incorrectly, it could cause the video to freeze until enough of a stream is received that the decoder can resynchronize. An Ethernet with 100 Mbps (million bits per second) full duplex links and non-blocking switches, however, has a large amount of BW available for transporting a digital audio/video stream. It is unlikely that packet errors will occur and it is not likely that a home application would generate enough network traffic to block packets and cause them to be dropped.

One disadvantage of Ethernet, however, is that it requires that twisted pair cable be installed. Some of the newer homes come with twisted pair cable already installed, but most older homes require that the cables be installed. This represents a cost (or work) for the consumer. Wireless devices have recently emerged as a way of solving this problem. IEEE802.11b, IEEE802.11g and IEEE802.11a have become popular as mobile extensions to the home network or as a means of connecting to rooms for which cable installation is prohibitive. These "Ethernet-like" wireless solutions work well for data applications such as Email and web browsing, but not for streaming video or audio when other network traffic is present.

Wireless presents a special problem for streaming audio or video. Unlike a hard-wired Ethernet, the total bandwidth (i.e. link rate) of the fastest wireless LANs is currently 54-60Mbps. This bandwidth is shared among all wireless devices on the subnetwork. Additionally, the protocols used in many wireless LAN technologies are inefficient in that they may require many retransmissions due to transmission collisions or packet errors. These problems can be minimized through the use of a wireless technology that has special accommodations for streaming.

In WO 01/74096 for Snelgrove et al., a wireless local loop system manages radio data transmission capacity and network resources shared by a plurality of subscriber stations by considering the type of connection desired to be created for a subscriber station. Each subscriber station includes ports for data and telephony communications. The subscriber stations communicate with a network utilization manager (NUM) in the network base station to request network resources from the base station. The NUM determines the requirements requested by the subscriber station, in data transmission capacity and/or QoS levels, for the desired connection and considers the utilization of the network resources at the base station, or sector of the base station, in determining whether to establish the desired connection.

Wireless links that include both Asynchronous and Isochronous services (the same two types of services that are available on a hard-wired IEEE1394 network) could provide a more suitable link for networks that transmit
both data and audio/video streams. One such link, currently available, is HiperLAN2. The Asynchronous service is similar to the service available on Ethernet (i.e., non-time critical packet transfer). The Isochronous services, similar to IEEE 1394, allow the end applications to request bandwidth. Once the bandwidth has been allocated, a channel is set up between the two nodes and the application is guaranteed to have at least that much bandwidth available. If those channels were to be used for transporting an audio/video stream over a wireless link, QoS guarantees could be greatly improved.

It is contemplated that home network systems would include both Ethernet-based devices where wired connections are cost-effective and wireless devices for inaccessible locations or mobile devices. Such a heterogeneous network presents special problems for streaming audio or video, because Quality of Service is critical to audio and video data transmission.

The transfer of audio or video stream from an Ethernet device to a HiperLAN2 device while maintaining an acceptable level of Quality of Service presents difficulties because of the two fundamentally different methods of providing QoS employed by these network standards. Ethernet QoS is based on prioritization of data packets (prioritized QoS), while HiperLAN2 (and IEEE 1394) allow for reservation of network resources (bandwidth) by devices at network segment endpoints. The provision of QoS by reservation of bandwidth is known as parameterized QoS.

The prioritized QoS scheme is favored for Ethernet type networks because of the independent nature of each packet sent on the network and the lack of layer 2 Isochronous services on Ethernet. On the other hand, for network technologies that have layer 2 isochronous services (e.g., IEEE1394, HiperLAN2), parameterized QoS is preferred. For IEEE1394 and HiperLAN2, it is possible for devices to request bandwidth from a bandwidth manager. Once that bandwidth is allocated, a high degree of QoS is guaranteed, barring other problems such as RF interference, for example.

In prioritized QoS, fields for assigning priorities have been provided at level two of the seven OSI (Open System Interconnection) levels, the data link layer and the network layer. For Ethernet, a 3-bit priority field is provided in the Ethernet header. These bits are allocated in IEEE802.1q. IEEE802.1D gives guidance on how an Ethernet switch reacts to the priorities and recommendations on how the priorities are mapped to priorities of other networks that do not use 8 priority levels. Suggested mappings of priorities to services are documented in IEEE802.1D Annex H and in RFCs 2815 and 2816. Mappings of priorities to various services are also suggested in a table in CEA-2007. This table is referenced by DENi (CEA-2008), which is a standard for Ethernet based AV Home Networks.

The use of priorities for QoS is also facilitated in the IP header. This is known as Differentiated Services (DiffServ for short) and is documented in IETF (Internet Engineering Task Force) RFC (Request for Comments) 2474 Definition of the Differentiated Services Field (DS Field) in the IPv4 and IPv6 Headers, December 1998 and RFC2475, An Architecture for Differentiated Services, December 1998.

An example of the use of these priorities in the IP header can be seen in DRAFT DVB IP12001-016r11 "Transport of DVB Services over IP-based Networks Part 1: MPEG-2 Transport Streams." The DVB system maps the priorities in the TOS field of the IP header to the 802.1q priority field in the Ethernet header.

For Prioritized QoS, typical operation would be that the source device marks packets with a certain priority at the time they are sent. For example, video packets might be marked with priority 001. The packets are sent out, and the Ethernet Switch places the incoming packets in a prioritized queue. Highest priority packets are generally passed through the switch before lower priority packets that are in the switch at the same time.

There are advantages and disadvantages to Prioritized QoS. The advantage of prioritized QoS includes its simplicity. It maps very nicely to the current Internet architectures. Packets traveling across the Internet may travel different paths than other packets in the same stream. By merely assigning priorities, an increased level of QoS is obtained while maintaining packet independence. Prioritized QoS schemes generally require no negotiation for resources. Because of this, QoS is not guaranteed. It is possible that higher priority packets will arrive at a router or switch that take priority over the packets in an AV stream. This is considered a disadvantage of prioritized QoS.

Parameterized QoS in the form of Isochronous Channels is implemented in IEEE 1394 and ETSI HiperLAN2. Both of these technologies allow devices to set up "channels" between endpoints. These channels are set up with a specified minimum bandwidth (e.g., 20Mbps). Thereafter, the devices are guaranteed to have that much bandwidth available for data transfer. These LAN technologies are able to allocate bandwidth by dividing their data transactions up into time slots. For IEEE 1394, a time slot is 125usec long. Isochronous traffic that is within the reserved bandwidth in the transmit queue is transmitted first in a time slot. All of the isochronous traffic is transmitted before any of the Asynchronous traffic. However, to make sure that there is always at least some Asynchronous bandwidth available for Asynchronous traffic, 20% of the bandwidth is reserved for Asynchronous traffic. Therefore, no more than 80% of the available bandwidth will be used by Isochronous Channels.

HiperLAN2 is very similar to 1394, except that it is wireless. It uses an IEEE 1394 transaction layer for interaction with the host processor, so many of those mechanisms are the same. There is a difference in speed. IEEE1394 supports 100, 200, and 400Mbps speeds while the basic bit rate of HiperLAN2 is 60Mbps.

The advantage of Parameterized QoS is that once the bandwidth is reserved, then a specific stream has "guaranteed" QoS as long as it stays within its contracted bandwidth. The disadvantage is that it requires negotiation of parameters up front. This negotiation is even more complex in a heterogeneous network with many subnetwork boundaries.

For heterogeneous applications such as a home network where both prioritized QoS (Ethernet) and parameterized QoS (HiperLAN2) are present, it is desirable to bridge a data stream (e.g. audio or video) that originates on a priority based Ethernet over the Isochronous Channel of IEEE1394, HiperLAN2 or similar network or serial bus with Isochronous Services.

### SUMMARY

The invention is defined by the appended claims.

An apparatus and method are disclosed for adapting prioritized QoS data packets such as those used by Ethernet devices with IEEE802.1q priorities to parameterized data packets that can be transmitted over the Isochronous Channel of an IEEE1394, HiperLAN2 or similar network or serial bus with Isochronous Services. An adapter device uses the presence of a priority on a Priority based QoS LAN as an indication to set up an Isochronous Channel on the IEEE1394, HiperLAN2 or similar device for the transfer of a potential stream. When the adapter device sees the priority field and it has determined that to get to the destination device, the next segment is across a LAN with Isochronous services (e.g. IEEE 1394 or HiperLAN2), the adapter sets up an Isochronous channel (if it is the first packet of a flow) to the next device in the stream path and then forwards that packet and any future packet that is marked identically (IP addresses, port numbers and priorities) down that Isochronous Channel. The adapter is also configured to convert packets that have been sent over the Isochronous Channel in the manner just described back to prioritized data packets for transmission to an Ethernet or other prioritized QoS device. Another feature of the adapter and method is dynamic adjustment of reserved bandwidth size based on activity within a channel.

One application of the adapter disclosed assumes an Ethernet Backbone with IEEE802.1q priorities, wherein data is transferred from one Ethernet node to another over a wireless bridge, the wireless bridge consisting of at least two of the disclosed and at least two parameterized QoS wireless/Ethernet Adapters.

### BRIEF DESCRIPTION OF THE DRAWINGS

The invention is best understood from the following detailed description when read with the accompanying drawing figures. It is emphasized that the various features are not necessarily drawn to scale. In fact, the dimensions may be arbitrarily increased or decreased for clarity of discussion.
Figure 1 illustrates a typical network in which the present invention may be implemented.
Figure 2 illustrates a block diagram of the elements of an exemplary adapter and the network components to which the adapter might connect.
Figure 3 illustrates mapping of stacks for both a prioritized and parameterized QoS data packet.

### DETAILED DESCRIPTION

In the following detailed description, for purposes of explanation and not limitation, exemplary embodiments disclosing specific details are set forth in order to provide a thorough understanding of the present invention. However, it will be apparent to one having ordinary skill in the art having had the benefit of the present disclosure, that the present invention may be practiced in other embodiments that depart from the specific details disclosed herein. Moreover, descriptions of well-known devices, methods and materials may be omitted so as to not obscure the description of the present invention.

The invention is directed toward providing a high Quality of Service connection for digital audio, video and other streaming data types in a heterogeneous communications network containing both prioritized and parameterized quality of service elements.

Ethernet has been a useful and widely-accepted communications standard for networking computers and peripherals. Ethernet is a hard-wired network solution and in some instances, it is impractical to run cables to a destination where a consumer would prefer to install a computer or a peripheral. An example would be a home network with components on different floors in an existing home where cable routing is not feasible or practical. One solution to this situation is to connect remotely located devices with wireless network components. One popular form of a wireless networking standard is HiperLAN2. Unfortunately, HiperLAN2 and Ethernet are not directly compatible and an all-HiperLAN2 network is not always desirable, owing to cost, compatibility and other factors. According to an aspect of the invention, an adapter device is provided to communicate between Ethernet and HiperLAN2 devices. More specifically, the adapter is intended to enable high priority streaming data packets originating on Ethernet to be transmitted over Isochronous reserved channels that are a feature of HiperLAN2. A second HiperLAN2 device / adapter set would receive the data from the first set and the. adapter to reconnect the message back to other Ethernet devices.

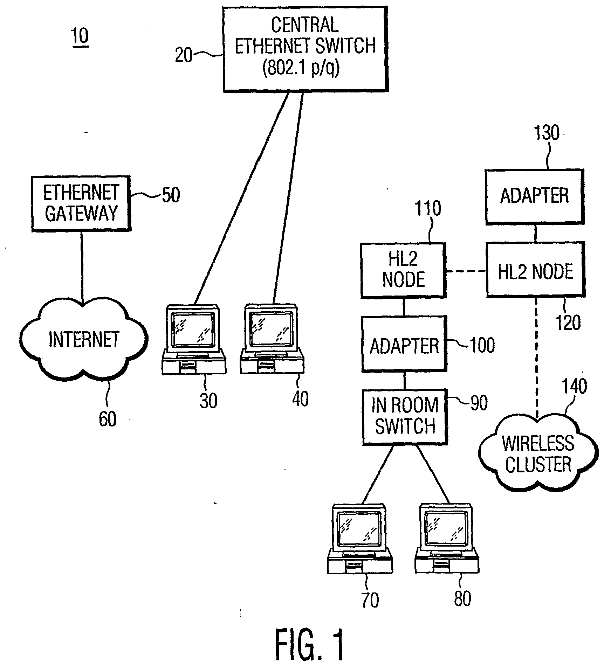

Figure 1 shows an example of a network 10 employing HiperLAN2 equipment 110, 120 coupled with a version of the disclosed adapter 100, 130 to connect remote Ethernet-based devices 70 -90 to an Ethernet-based network 20-60. A conventional Ethernet-based network is comprised of Central Switch 20, Internet Gateway 50 and endpoint computers 30 and 40, all of which are on the Ethernet segment of the LAN. Endpoint computers 70 and 80 and In-room switch 90 are remotely located and cable connections to the central switch are not feasible. Instead of hardwiring computers 70 and 80 to the central switch, the in-room switch is connected to an adapter 100, which is connected to a HiperLAN2 wireless transceiver. A second HiperLAN2 wireless transceiver 120 is connected to a second adapter 130, which is also connected to the central switch 20. Communications between the remotely located computers 70 and 80 and the central switch 20 is established over a wireless connection between the two HiperLAN2 devices through the two adapters. Note that this is not limited to two wireless devices and that other remotely-located devices can have access to the central switch via adapter 130, via wireless cluster 140 established by wireless device 120.

An object of the invention is to provide high level quality of service between the Ethernet and the wireless devices in the exemplary network depicted in Figure 1. In Ethernet or other prioritized QoS networks, data is sent in discrete packets, with assigned priorities. Each individual node along the path through which the packets travel determines the packet's priority level and forwards the packet either ahead of or behind other packets the node has received depending on priority. 1 In HiperLAN2 and IEEE 1394 networks, two forms of data transmission are available, asynchronous and isochronous channels. The asynchronous communication works much the same as Ethernet in that packets have no guarantee of timely delivery, especially on a heavily loaded network. The isochronous channels, however, provide a more reliable transmission mode for data that must be transmitted on time, such as audio or video streams. An isochronous channel guarantees that a certain amount of bandwidth will be available allowing packets to be transmitted on time. This is accomplished by opening time slot windows in data transmission. Each particular window is open for a discrete time on a periodic basis while the channel is open, thus guaranteeing data will be transmitted through the channel on time.

One aspect of the invention is to connect streaming data originating on Ethernet to a network that operates with isochronous channels and to take advantage of those channels to ensure high level quality of service for higher priority messages such as streaming data. In an exemplary version, Ethernet packet payloads are encapsulated into packets transmittable on the isochronous channels HiperLAN2 or IEEE1394.

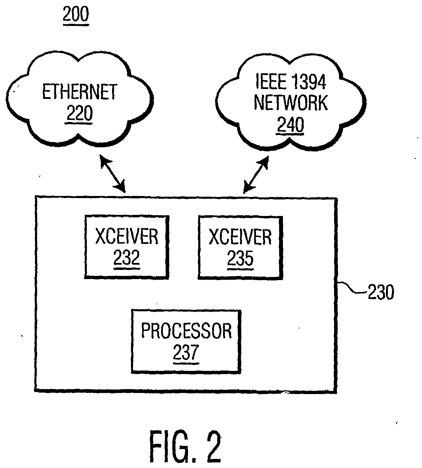

Figure 2 shows an exemplary adapter 230 connected to an Ethernet network 220 and to an IEEE1394 network 240. Hardware components of adapter 230 include a first device 232 for receiving and/or transmitting data to the Ethernet side of the adapter and a second device 235 for receiving and/or transmitting data to the HiperLAN2 side of the adapter. Processor 237 is in communications with both devices (which may be for example, transceiver devices) and performs the required operations, to a) recognize that prioritized data has been received from the Ethernet; b) determine that the level of the prioritized data is such that the data should be transmitted across the HiperLAN2 device in an isochronous channel (as opposed to the lower QoS asynchronous transaction); c) establish communications over the HiperLAN2 device and set up an isochronous channel, including necessary address mapping of destination devices; d) convert the Ethernet packet to a IEEE 1394 format packet and e) transmit the packet to the HiperLAN2 device on the IEEE 1394 network. Once the isochronous channel is set up, the processor would then receive, convert and transmit all further data packets from the Ethernet transceiver until either a time out or a flag indicates that no more data remains to be transmitted to the particular address for which the isochronous channel was opened. In that case, the processor sends the appropriate message to the Isochronous Resource Manager (IRM) on the 1394 network (which may alternatively be in the HiperLAN2 device) to signal a "teardown" of the isochronous channel.

In the case where data is received by the HiperLAN2 device 235, the processor would perform operations to convert the data to Ethernet format and retransmit the data to the Ethernet transceiver. This operation is performed regardless of whether the data is coming from an asynchronous or isochronous channel. At the very least, the payload is removed from the IEEE 1394 packet and then encapsulated in an Ethernet packet. Included in the payload is the IP header, which is used to determine the correct physical addresses on each segment of the LAN. Asynchronous packets use dynamic source and destination node addresses while isochronous channels use channel numbers. RFC2734 specifies how IP packets are carried in asynchronous packets.

In a paper by Johansson entitled "IPv4 over IEEE 1394" submitted to Network Working Group RFC 2734 (Document XP002238651) in December 1999, methods for using IEEE Std 1394-1995, Standard for a High Performance Serial Bus (and its supplements), for the transport of Internet Protocol Version 4 (IPv4) datagrams are discussed. The Johansson paper describes the methods, data structures and codes for that purpose and additionally defines methods for an address resolution protocol (1394 ARP) and a multicast channel allocation protocol (MCAP) - both of which are specific to Serial Bus.

In an article by Ecklund et al. entitled "IEEE 802.16: A Technical Overview of the WirelessMAN Air Interface for Broadband Wireless Access", published in IEEE Communications Magazine, pages 98-107 (June 2002), the medium access control (MAC) and physical features of the communications standard are discussed. The reference mentions that convergence sublayers are used to map transport-layer-specific traffic to a MAC that can carry any type of traffic.

### Establishment of Isochronous Channel

The first task for the adapter processor is to determine whether to open an isochronous channel over the IEEE 1394 network. Low priority data would be sent across the HiperLAN2 network as an asynchronous transaction, much the same as it is sent across the Ethernet, one packet at a time, first in, first out. However, it is desirable that high priority data, such as streaming audio or video be transmitted across the IEEE 1394 network, such as via a HiperLAN2 link, in an isochronous channel.

In one embodiment of the invention the presence of a priority header on a priority based QoS LAN such as Ethernet is used as an indication to set up an Isochronous Channel for the transfer of a potential stream. When an adapter device recognizes the priority field and it has determined that to get to the destination
device, the next segment is across a LAN with Isochronous services, the adapter sets up an Isochronous channel (if it is the first packet of a flow) to the next device in the stream path and then forwards that packet and any future packet that is marked identically (addresses and priorities) down that isochronous channel. Alternatively, IP addresses and Port numbers (source and destination) can be used to identify packets of the same stream.

Instead of using the simple presence of the priority bits as an indication to set up a channel, one could use a slightly different variation. Specific priorities can be used as indications to set up channels. For example, in the Consumer Electronics Association (CEA) standard CEA-2007 priority mappings, priorities 1, 2, 4, and 5 are streaming priorities. (CEA 2007 defines the use of the priority field in 802.1Q Ethernet packets to allow IP Ethernet networks to concurrently support differing QoS implementations. This document recognizes three classes of QoS: Best effort, priority routing and fully managed connections). Accordingly, an alternative embodiment would set up isochronous channels only when the adapter recognizes those priorities.

### Preservation of Priority Levels Across Parameterized Network

In the case of a wireless bridge based on HiperLAN2, data packets would be transported from Ethernet to an Ethernet/IEEE1394 adapter to a HiperLAN2 device. Data is then sent over a wireless link to a next HiperLAN2 device and then to an IEEE 1394/Ethernet Adapter and finally to the Ethernet network on the other side of the wireless link. In a preferred embodiment, a single adapter is capable of making Ethernet to IEEE1394 conversions and IEEE 1394 to Ethernet conversions. At the receiving end, the stream that is traveling in an Isochronous Channel would be placed back onto an Ethernet Segment using priority QoS. This requires that the receiving adapter know at what level to set the priority. This can be done in several ways. One would be to carry the entire Ethernet header across the HiperLAN2 link with the packets. In this case, this would be like tunneling the Ethernet packets through a HiperLAN2 channel. In the case of IEEE 1394, it would be like tunneling the packets through an IEC61883/IEEE 1394 channel. The Ethernet destination and source address would need to be replaced Media Access Control (MAC) addresses on the next LAN segment before the packet is forwarded on. In yet another embodiment, the Ethernet header could be stripped off of the packet (down to the IP layer) and then encapsulated in the packet in the proper layer (IEC61883 for IEEE 1394) for transport across the Isochronous Channel. In this case, the same priority that exists in the Ethernet header can be placed in the IP header either by the transmitting adapter or the originating application.

### Inclusion of IP Layer in Isochronous Channel

Because two different networks are connected to the adapter and device addresses in those networks are in different formats, some form of identifying each device in a common way is needed. For most LANs today, the network-addressing scheme of choice is Internet Protocol (IP). An IP layer can provide the common network-addressing layer that allows any device to communicate with any other device. This is well known on the control side and for streaming video across classic IP based networks such as Ethernet. However, IP has not been used in Isochronous Channels up to this point. But the present invention recognizes that IP can add the same type of common network layer for streaming through isochronous channels that it provides for control and file exchange. An aspect of the adapter according to the present invention is that an IP layer be included in the stream that traverses the network, including the portion of the path that includes an Isochronous Channel. This eliminates the need for mappings and negotiations.

In one embodiment, an IP layer can be included in an Isochronous Channel using IEEE 1394 by defining a new format (FMT) code to be placed in the Common Isochronous Packet (CIP) header of an IEC-61883 layer, which defines the rest of the packet as an IP packet. There are currently codes for the following data standards: Digital Video Cassette Recorder (DVCR) =000000, Motion Picture Experts Group (MPEG)=100000, Audio and Music (A&M) =010000, and Digital Satellite System (DSS)=100001. There are also two vendor unique (free) codes that can be used by a specific vendor to send a non-standard format. Either a new, industry-wide specific code could be established for sending IP in the Isochronous Channels or either of the two vendor unique codes can be used.

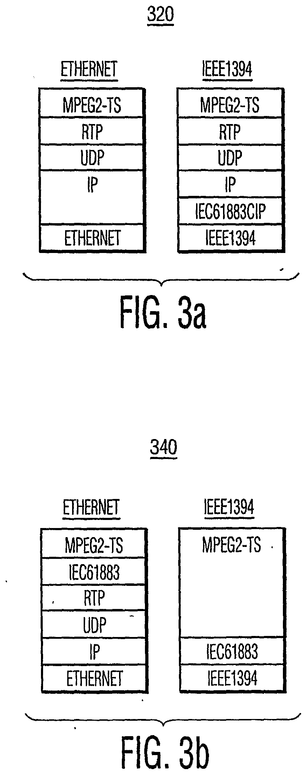

Figure 3a is an exemplary Illustration of how an IP layer can be carried over IEC61883 in a 1394 Isochronous Channel. In the figure, UDP is the User Datagram Protocol and RTP is the Real Time Transport Protocol. Carrying IP, UDP and RTP in the IEC 61888 header in the isochronous channel is in contrast to a proposal within Consumer Electronics Association to carry IEC61883 over IP on the Ethernet side. The example protocol stacks in Figures 3a and 3b illustrate the differences. Unlike the proposed CEA stack arrangement of Figure 3b, carrying IP over the IEC61883 layer has the advantage of providing common addressing information in an IEC61883/MPEG2 Isochronous stream. While this example shows UDP, RTP and MPEG2-TS protocols above the IP layer, other protocols are possible, such as TCP and HTTP.

Transferring MPEG2 directly in 61883 does not work well for networks because of the lack of addressing information. By including the IP layer in the isochronous channel, addressing information is preserved across the channel.

In a typical embodiment, it will be necessary for the adapter processor to perform some packet segmentation on the Ethernet side and reassembly by the receiving adapter processor due to the maximum packet size of the different networks. In some cases, the maximum Ethernet packet (∼ 1500 bytes) will be larger than that allowed on an IEEE1394/IEC61883 Isochronous Channel. In that case, the packet would need to be fragmented at the transmitter and then reassembled at the receiving end. IEC61883 contains provisions to do this. IP also contains provisions for fragmentation, so it is possible to match packet sizes regardless of the source and destination of the packets.

To retain the priorities so that they can be regenerated on the receiving end of the bridge, the source device or the transmitting adapter can populate the priority field of the IP header to be the same as the priority in the Ethernet header. Since the IP header is carried across the link, the priority information will be available at the terminating adapter.

### Address Mapping

Every packet passing on a LAN segment must have the physical address of a source and destination (or Isochronous Channel number) included in the packet. For each LAN segment, Address Resolution Protocol messages (per Internet standard documents RFC826 for Ethernet and RFC2734 for IEEE 1394) can be used to map IP addresses to physical addresses. In many cases, the physical address will end up being the address of an adapter or bridge, and only represents one hop in the packet's journey to the final destination (identified by the IP address). RFC2734 states how to send IP packets over Asynchronous Services on 1394 and how to send an ARP on IEEE1394. No such document exists for isochronous channels, but the ARP according to RFC2734 can still be used to find the physical address of the destination IEEE 1394 (or HiperLAN2) node. Once the source adapter knows the destination adapter's address, it can set up an IEEE 1394/IEC61883 Isochronous Channel to that node. The packets can then be sent down that Isochronous Channel in the format depicted in Figure 3a (320) using the channel number determined at the time that the isochronous channel was set up. If that node is not the final destination (e.g., the final destination is an Ethernet node), then the receiving adapter broadcasts an ARP on the destination Ethernet. The destination node responds with its physical address and the adapter forwards the stream to that node, loading the Ethernet header with the proper source and destination physical addresses and with the priority from the IP header. The adapters can maintain the physical address/IP address mapping information in tables so that an ARP does not need to be performed on every packet.

### Bandwidth Sizing

One other aspect to be addressed in sending an Ethernet data stream over an isochronous channel is bandwidth negotiation. There are many ways to determine the amount of bandwidth to be reserved by the pair of adapters. The easiest way is for the bandwidth to be a standardized predetermined number that covers the maximum that may occur. When the adapters need to set up a channel, they can operate to set the bandwidth allocation registers to provide a maximum bandwidth. This however is not very efficient use of the bandwidth available. Another possibility would be to adaptively set the bandwidth of the Isochronous Channel. For example, the bandwidth can be set high (to cover any realistic video stream), and then as the adapter collects data on the stream (e.g., average bit rate, peak bit rate, etc.), the adapter can adjust the reserved bandwidth.

Another method of setting the bandwidth is including a predefined field (preferably in the Ethernet header) that allows for the video source to declare the bit rate of the stream in each packet. This field could vary, within some predefined minimum, maximum, and maximum change and change interval. A variation of this would be to use a priority mapping different than that presented in CEA-2007 or Annex H pf IEEE802.1d. In one configuration, the priorities would be tied to some bit rate (e.g., 1=5Mbps, 2=10Mbps, etc.). However, one disadvantage to this approach is that switches will treat these numbers as priorities and which may not be the most optimal way of using the priorities. In an exemplary embodiment, the priorities and bit rate declarations are independent.

### Tear Down

Once the stream stops, the Isochronous Channel will need to be torn down to free up the bandwidth. A number of embodiments are possible. In one embodiment, if the required bandwidth is carried in the packets as previously discussed, then a packet can be sent at the end of the stream with a null bandwidth setting (setting of zero bandwidth). Another possibility that does not require any signaling is to simply tear down the channel if no packets that need to traverse the Isochronous Channel have been generated within a specified period of time (e.g., 1 minute). So, in this case, if no packets for a specific video stream have been received in the past minute, then the Isochronous Channel gets torn down and the bandwidth becomes available for other applications.

In accordance with another aspect, the subject invention resides in the program storage medium that constrains operation of the associated processors(s), and in the method steps that are undertaken by cooperative operation of the processor(s) on the messages within the communications network. These processes may exist in a variety of forms having elements that are more or less active or passive. For example, they exist as software program(s) comprised of program instructions in source code or object code, executable code or other formats. Any of the above may be embodied on a computer readable medium, which include storage devices and signals, in compressed or uncompressed form. Exemplary computer readable storage devices include conventional computer system RAM (random access memory), ROM (read only memory), EPROM (erasable, programmable ROM), EEPROM (electrically erasable, programmable ROM), flash memory, and magnetic or optical disks or tapes. Exemplary computer readable signals, whether modulated using a carrier or not, are signals that a computer system hosting or running the computer program may be configured to access, including signals downloaded through the Internet or other networks. Examples of the foregoing include distribution of the program(s) on a CD ROM or via Internet download. The same is true of computer networks in general.

In the form of processes and apparatus implemented by digital processors, the associated programming medium and computer program code is loaded into and executed by a processor, or may be referenced by a processor that is otherwise programmed, so as to constrain operations of the processor and/or other peripheral elements that cooperate with the processor. Due to such programming, the processor or computer becomes an apparatus that practices the method of the invention as well as an embodiment thereof. When implemented on a general-purpose processor, the computer program code segments configure the processor to create specific logic circuits. Such variations in the nature of the program carrying medium, and in the different configurations by which computational and control and switching elements can be coupled operationally, are all within the scope of the present invention

The foregoing discussion of the invention has been presented for purposes of illustration and description. Further, the description is not intended to limit the invention to the form disclosed herein. Consequently, variations and modifications commensurate with the above teachings and with the skill and knowledge of the relevant art are within the scope of the present invention. The embodiment described herein above is further intended to explain the best mode presently known of practicing the invention and to enable others skilled in the art to utilize the invention as such, or in other embodiments, and with the various modifications required by their particular application or uses of the invention.

## Claims

1. A method for transferring packet-based digital data between a first device in a first communications network (220) and a second device in a second communications network (240), said second communications network providing for isochronous channel communications between devices interconnected via the second communications network, said method comprising the steps of:
- receiving a stream of packet based digital data from the first device in the first communications network, the first communications network having a prioritized communications protocol;
- determining a priority code associated with a data packet of said stream;
- determining whether said prioritized data packet requires transmission to a second device associated with said second communications network over an isochronous channel based on said priority code,
- in the affirmative, establishing an isochronous channel of a reserved bandwidth for communicating said data stream to the second device in the second communications network,
- modifying header information associated with at least said data packet in said stream into a format suitable for communication through said established isochronous channel for transfer to said second communications network, wherein said modifying comprises including an IP layer in an isochronous channel by defining a new format, FMT, code to be placed in a common isochronous packet header associated with data packets of a IEC-61883 layer.

2. The method of claim 1, wherein said first communications network is an Ethernet network.

3. The method of claim 1, wherein the step of modifying header information comprises embedding an IP header associated with at least said data packet into an OSI layer 3 header in a packet suitable for transmission over said second communications network having a communications protocol that allows for set up and communication over discrete channels of a reserved bandwidth.

4. The method of claim 1, further comprising determining when there is no more data to be received from said first device and establishing communications with said second device to close said isochronous channel.

5. The method of claim 1 further comprising establishing communications with said second device to close said reserved isochronous channel after a predetermined period of time within which no further communication is received from said first device.

6. The method of claim 1 wherein said communications with said second communications network is monitored for bandwidth usage and communications is established over said network when necessary to modify the amount of said reserved bandwidth based on said bandwidth usage.

7. The method of claim 1 wherein said communications with said second device to open the isochronous channel further comprises evaluating a portion of a data header contained in said prioritized data packet and requesting a bandwidth size based on the results of said evaluation.

8. A computer readable medium comprising program code for performing the method of claim 1 when operating on a processor (237) .

9. An apparatus (230) for providing packet-based digital communications between a first communications network (220) and a second communications network (240), said second communications network providing for isochronous channel communications between devices interconnected via the second communications network, said apparatus comprising:
- a first transceiver (232) adapted for communicating with the first communications network, the first communications network having a prioritized communications protocol;
- a second transceiver (235) adapted for communicating with the second communications network, the second communications network having a communications protocol that allows for set up and communications over discrete channels of a reserved bandwidth;
- a processor (237), in communication with said first transceiver, for determining a priority code associated with a data packet received by said first transceiver, and determining whether said prioritized data packet requires transmission to a second device associated with said second communications network over an isochronous channel based on said priority code;
- said processor, further in communication with said second transceiver, for establishing an isochronous channel of reserved bandwidth to the next device in the data packet's path;
- said processor is adapted to perform a first modification process to convert a data packet received from said first transceiver into a format suitable for communication through said second transceiver to said second communications network; and
- said processor is further configured for performing a second modification process to convert a data packet received from said second transceiver into a format suitable for communication through said first transceiver to said first communications network,
wherein said first modification process comprises including an IP layer in an isochronous channel by defining a new format, FMT, code to be placed in a common isochronous packet header associated with data packets of a IEC-61883 layer.

10. The apparatus of claim 9 wherein said first communications network is an Ethernet network.

11. The apparatus of claim 9 wherein said first modification process embeds an IP header associated with said data packet received from said first transceiver into an OSI layer 3 header in a packet suitable for transmission over said second communications network.

12. The apparatus of claim 9 wherein said second modification process strips from a data packet received from said second communication network a data header associated with said second communication network; and wherein said second modification process further converts said data packet into a format suitable for transmission to said first communications network.

## Patentansprüche

1. Verfahren zum Übertragen paketbasierter digitaler Daten zwischen einer ersten Vorrichtung in einem ersten Kommunikationsnetz (220) und einer zweiten Vorrichtung in einem zweiten Kommunikationsnetz (240), wobei das zweite Kommunikationsnetz zwischen Vorrichtungen, die über das zweite Kommunikationsnetz miteinander verbunden sind, Kommunikationen auf einem isochronen Kanal bereitstellt, wobei das Verfahren die folgenden Schritte umfasst:
- Empfangen eines Datenstroms paketbasierter digitaler Daten von der ersten Vorrichtung in dem ersten Kommunikationsnetz, wobei das erste Kommunikationsnetz ein priorisiertes Kommunikationsprotokoll besitzt;
- Bestimmen eines Prioritätscodes, der einem Datenpaket des Datenstroms zugeordnet ist;
- Bestimmen, ob das priorisierte Datenpaket die Sendung an eine zweite Vorrichtung, die dem zweiten Kommunikationsnetz zugeordnet ist, über einen isochronen Kanal erfordert, auf der Grundlage des Prioritätscodes,
- bei positiver Antwort, Aufbauen eines isochronen Kanals mit einer reservierten Bandbreite zur Kommunikation des Datenstroms an die zweite Vorrichtung in dem zweiten Kommunikationsnetz,
- Ändern von Anfangsblockinformationen, die mindestens dem Datenpaket in dem Datenstrom zugeordnet sind, in ein Format, das zur Kommunikation über den aufgebauten isochronen Kanal zur Übertragung an das zweite Kommunikationsnetz geeignet ist,
wobei das Ändern das Aufnehmen einer IP-Schicht in einen isochronen Kanal durch Definieren eines Codes in einem neuen Format, FMT, der in dem Anfangsblock eines gemeinsamen isochronen Pakets, der Datenpaketen einer IEC-61883-Schicht zugeordnet ist, angeordnet werden soll, umfasst.

2. Verfahren nach Anspruch 1, wobei das erste Kommunikationsnetz ein Ethernet-Netz ist.

3. Verfahren nach Anspruch 1, wobei der Schritt des Änderns von Anfangsblockinformationen das Einbetten eines IP-Anfangsblocks, der mindestens dem Datenpaket zugeordnet ist, in einen Anfangsblock der OSI-Schicht 3 in einem Paket, das zur Sendung über das zweite Kommunikationsnetz, das ein Kommunikationsprotokoll besitzt, das den Aufbau diskreter Kanäle mit einer reservierten Bandbreite und die Kommunikation über sie ermöglicht, geeignet ist, umfasst.

4. Verfahren nach Anspruch 1, das ferner das Bestimmen, wann keine weiteren Daten von der ersten Vorrichtung zu empfangen sind, und das Aufbauen von Kommunikationen mit der zweiten Vorrichtung, um den isochronen Kanal zu schließen, umfasst.

5. Verfahren nach Anspruch 1, das ferner das Aufbauen von Kommunikationen mit der zweiten Vorrichtung, um den reservierten isochronen Kanal nach einer vorgegebenen Zeitdauer, innerhalb deren keine weitere Kommunikation von der ersten Vorrichtung empfangen wird, zu schließen, umfasst.

6. Verfahren nach Anspruch 1, wobei die Kommunikationen mit dem zweiten Kommunikationsnetz auf Bandbreitennutzung überwacht werden und bei Bedarf Kommunikationen über das Netz aufgebaut werden, um die Menge der reservierten Bandbreite auf der Grundlage der Bandbreitennutzung zu ändern.

7. Verfahren nach Anspruch 1, wobei die Kommunikationen mit der zweiten Vorrichtung zum Öffnen des isochronen Kanals ferner das Auswerten eines Abschnitts eines Datenanfangsblocks, der in dem priorisierten Datenpaket enthalten ist, und das Anfordern einer Bandbreitengröße auf der Grundlage der Ergebnisse der Auswertung umfassen.

8. Computerlesbares Medium, das Programmcode zum Ausführen des Verfahrens nach Anspruch 1, wenn es in einem Prozessor (237) betrieben wird, umfasst.

9. Vorrichtung (230) zum Bereitstellen paketbasierter digitaler Kommunikationen zwischen einem ersten Kommunikationsnetz (220) und einem zweiten Kommunikationsnetz (240), wobei das zweite Kommunikationsnetz zwischen Vorrichtungen, die über das zweite Kommunikationsnetz miteinander verbunden sind, Kommunikationen auf einem isochronen Kanal bereitstellt, wobei die Vorrichtung umfasst:
- einen ersten Transceiver (232), der für das Kommunizieren mit dem ersten Kommunikationsnetz ausgelegt ist, wobei das erste Kommunikationsnetz ein priorisiertes Kommunikationsprotokoll besitzt;
- einen zweiten Transceiver (235), der zum Kommunizieren mit dem zweiten Kommunikationsnetz ausgelegt ist, wobei das zweite Kommunikationsnetz ein Kommunikationsprotokoll besitzt, das das Aufbauen von diskreten Kanälen mit einer reservierten Bandbreite und Kommunikationen über sie ermöglicht;
- einen Prozessor (237) in Kommunikation mit dem ersten Transceiver, um einen Prioritätscode zu bestimmen, der einem durch den ersten Transceiver empfangenen Datenpaket zugeordnet ist, und um auf der Grundlage des Prioritätscodes zu bestimmen, ob das priorisierte Datenpaket die Sendung an eine zweite Vorrichtung, die dem zweiten Kommunikationsnetz zugeordnet ist, über einen isochronen Kanal erfordert;
- wobei der Prozessor ferner in Kommunikation mit dem zweiten Transceiver steht, um zu der nächsten Vorrichtung auf dem Weg des Datenpakets einen isochronen Kanal mit reservierter Bandbreite aufzubauen;
- wobei der Prozessor dafür ausgelegt ist, einen ersten Änderungsprozess zum Umsetzen eines Datenpakets, das von dem ersten Transceiver empfangen wird, in ein Format, das zur Kommunikation über den zweiten Transceiver an das zweite Kommunikationsnetz geeignet ist, auszuführen; und
- wobei der Prozessor ferner dafür konfiguriert ist, einen zweiten Änderungsprozess zum Umsetzen eines von dem zweiten Transceiver empfangenen Datenpakets in ein Format, das zur Kommunikation über den zweiten Transceiver an das zweite Kommunikationsnetz geeignet ist, auszuführen,
wobei der erste Änderungsprozess das Aufnehmen einer IP-Schicht in einen isochronen Kanal durch Definieren eines Codes in einem neuen Format, FMT, der in einem Anfangsblock eines gemeinsamen isochronen Pakets, der Datenpaketen einer IEC-61883-Schicht zugeordnet ist, angeordnet werden soll, umfasst.

10. Vorrichtung nach Anspruch 9, wobei das erste Kommunikationsnetz ein Ethernet-Netz ist.

11. Vorrichtung nach Anspruch 9, wobei der erste Änderungsprozess einen IP-Anfangsblock, der dem Datenpaket zugeordnet ist, das von dem ersten Transceiver empfangen wird, in einen OSI-Schicht-3-Anfangsblock in einem Paket, das zur Übertragung über das zweite Kommunikationsnetz geeignet ist, einbettet.

12. Vorrichtung nach Anspruch 9, wobei der zweite Änderungsprozess einen Datenanfangsblock, der dem zweiten Kommunikationsnetz zugeordnet ist, von einem von dem zweiten Kommunikationsnetz empfangenen Datenpaket entfernt; und wobei der zweite Änderungsprozess ferner das Datenpaket in ein zur Übertragung an das erste Kommunikationsnetz geeignetes Format umsetzt.

## Revendications

1. Procédé de transfert de données numériques basées sur des paquets entre un premier dispositif dans un premier réseau de communications (220) et un deuxième dispositif dans un deuxième réseau de communications (240), ledit deuxième réseau de communications permettant des communications par canaux isochrones entre des dispositifs interconnectés via le deuxième réseau de communications, ledit procédé comprenant les étapes consistant à :
- recevoir un flux de données numériques basées sur des paquets provenant du premier dispositif dans le premier réseau de communications, le premier réseau de communications ayant un protocole de communications classées par ordre de priorité ;
- déterminer un code de priorité associé à un paquet de données dudit flux ;
- déterminer si ledit paquet de données classées par ordre de priorité nécessite une transmission à un deuxième dispositif associé audit deuxième réseau de communications au travers d'un canal isochrone selon ledit code de priorité,
- dans l'affirmative, établir un canal isochrone d'une bande passante réservée pour la communication dudit flux de données avec le deuxième dispositif dans le deuxième réseau de communications,
- modifier les informations d'en-tête associées au moins audit paquet de données dans ledit flux en un format adapté à la communication via ledit canal isochrone établi pour le transfert audit deuxième réseau de communications, dans lequel ladite modification comprend l'ajout d'une couche IP dans un canal isochrone en définissant un nouveau code de format à placer dans un en-tête de paquet isochrone commun associé à des paquets de données d'une couche CEI-61883.

2. Procédé selon la revendication 1, dans lequel ledit premier réseau de communications est un réseau Ethernet.

3. Procédé selon la revendication 1, dans lequel l'étape de modification des informations d'en-tête comprend l'intégration d'un en-tête IP associé au moins audit paquet de données à un en-tête de couche 3 OSI dans un paquet adapté à une transmission sur ledit deuxième réseau de communications ayant un protocole de communications qui permet la configuration et la communication sur des canaux discrets d'une bande passante réservée.

4. Procédé selon la revendication 1, comprenant en outre une étape consistant à déterminer qu'il n'y a plus de données à recevoir dudit premier dispositif et à établir des communications avec ledit deuxième dispositif pour fermer ledit canal isochrone.

5. Procédé selon la revendication 1, comprenant en outre l'établissement de communications avec ledit deuxième dispositif pour fermer ledit canal isochrone réservé après une période prédéterminée pendant laquelle aucune autre communication n'est reçue dudit premier dispositif.

6. Procédé selon la revendication 1, dans lequel l'utilisation de bande passante desdites communications avec ledit deuxième réseau de communications est surveillée et les communications sont établies au travers r ledit réseau lorsque c'est nécessaire pour modifier le volume de ladite bande passante réservée en fonction de ladite utilisation de la bande passante.

7. Procédé selon la revendication 1, dans lequel lesdites communications avec ledit deuxième dispositif pour ouvrir le canal isochrone comprennent en outre l'évaluation d'une partie d'un en-tête contenu dans ledit paquet de données classées par ordre de priorité et la demande d'une taille de bande passante en fonction des résultats de ladite évaluation.

8. Support lisible sur ordinateur comprenant du code de programme pour exécuter le procédé selon la revendication 1 lors d'une utilisation sur un processeur (237).

9. Appareil (230) pour fournir des communications numériques basées sur des paquets entre un premier réseau de communications (220) et un deuxième réseau de communications (240), ledit deuxième réseau de communications permettant des communications par canaux isochrones entre des dispositifs interconnectés via le deuxième réseau de communications, ledit appareil comprenant :
- un premier émetteur-récepteur (232) adapté à la communication avec le premier réseau de communications, le premier réseau de communications ayant un protocole de communications classées par ordre de priorité ;
- un deuxième émetteur-récepteur (235) adapté à la communication avec le deuxième réseau de communications, le deuxième réseau de communications ayant un protocole de communications qui permet la configuration et les communications sur des canaux discrets d'une bande passante réservée ;
- un processeur(237), qui communique avec ledit premier émetteur-récepteur pour déterminer un code de priorité associé à un paquet de données reçu par ledit premier émetteur-récepteur, et déterminer si ledit paquet de données classées par ordre de priorité nécessite une transmission à un deuxième dispositif associé audit deuxième réseau de communications au travers d un canal isochrone selon ledit code de priorité ;
- ledit processeur, qui communique en outre avec ledit deuxième émetteur-récepteur, pour établir un canal isochrone de bande passante réservée avec le dispositif suivant dans le trajet du paquet de données ;
- ledit processeur est adapté pour effectuer un premier processus de modification pour convertir un paquet de données reçu dudit premier émetteur-récepteur dans un format adapté à la communication via ledit deuxième émetteur-récepteur avec ledit deuxième réseau de communications ; et
- ledit processeur est en outre configuré pour effectuer un deuxième processus de modification pour convertir un paquet de données reçu dudit deuxième émetteur-récepteur dans un format adapté à la communication via ledit premier émetteur-récepteur avec ledit premier réseau de communications,
dans lequel ledit premier processus de modification comprend l'ajout d'une couche IP dans un canal isochrone en définissant un nouveau code de format, FMT, à placer dans un en-tête de paquet isochrone commun associé à des paquets de données d'une couche CEI-61883.

10. Appareil selon la revendication 9, dans lequel ledit premier réseau de communications est un réseau Ethernet.

11. Appareil selon la revendication 9, dans lequel ledit premier processus de modification intègre un en-tête IP associé audit paquet de données reçu dudit premier émetteur-récepteur à un en-tête de couche 3 OSI dans un paquet adapté à une transmission sur ledit deuxième réseau de communications.

12. Appareil selon la revendication 9, dans lequel ledit deuxième processus de modification extrait d'un paquet de données reçu dudit deuxième réseau de communications un en-tête de données associé audit deuxième réseau de communications ; et dans lequel ledit deuxième processus de modification convertit en outre ledit paquet de données dans un format adapté à une transmission audit deuxième réseau de communications.
